# EUROPÄISCHE PATENTSCHRIFT

(11) **EP 1 208 546 B1**
(45) Veröffentlichungstag und Bekanntmachung des Hinweises auf die Patenterteilung: **03.12.2003**
(21) Anmeldenummer: 00969218.7
(22) Anmeldetag: 01.09.2000
(51) Int. Cl.: G07F 7/10

(54) **SCHALTUNG UND VERFAHREN ZUR SICHERUNG ELEKTRONISCHER VORRICHTUNGEN**
CIRCUIT AND METHOD FOR SAFEGUARDING ELECTRONIC DEVICES
CIRCUIT ET PROCEDE DE SECURISATION DE DISPOSITIFS ELECTRONIQUES

(30) Priorität: 01.09.1999 DE 19941682
(43) Veröffentlichungstag der Anmeldung: 29.05.2002
(73) Patentinhaber: Infineon Technologies AG, 81669 München (DE)
(72) Erfinder: BRÜCKLMEIER, Eric-Roger, 80634 München (DE); PALM, Herbert, 85635 Höhenkirchen (DE); KUX, Andreas, 85540 Haar (DE)
(74) Vertreter: Epping Hermann & Fischer
(86) Internationale Anmeldenummer: DE0003004
(87) Internationale Veröffentlichungsnummer: WO01016898

(56) Entgegenhaltungen:
- EP-A- 0 809 217
- US-A- 4 484 067
- US-A- 4 851 653
- US-A- 5 559 505
- US-A- 5 594 227

## Beschreibung

Die vorliegende Erfindung betrifft eine elektronische Schaltung und ein Verfahren zur Sicherung elektronischer Vorrichtungen, insbesondere zur Sicherung der Freigabe von Chipfunktionen.

Bestimmte Formen elektronischer Schaltungen, wie zum Beispiel Chipkarten, erfordern ein hohes Maß an Geheimhaltung der in der Schaltung enthaltenen Informationen oder gespeicherten Daten (zum Beispiel Schlüssel für kryptologische Verfahren). Diese sicherheitsrelevanten Informationen müssen sowohl vor Fremdanalysen als auch vor Manipulation geschützt werden. Es muß insbesondere vermieden werden, daß sich Unbefugte Zugang zu den Informationen verschaffen, indem sie Versuche nicht autorisierter Zugriffe auf die betreffende elektronische Vorrichtung so oft wiederholen, bis eine Analyse der sicherheitsrelevanten Informationen oder ein Zugriff ermöglicht ist. Das kann zum Beispiel der Fall sein, wenn durch mehrmaliges Probieren eine PIN herausgefunden werden kann. Eine Sicherung eines Chips oder einer Chipkarte erfolgt deshalb in der Weise, daß nach einer bestimmten Anzahl nicht autorisierter Zugriffsversuche jeder weitere Zugriffsversuch und damit in der Regel auch ein autorisierter Zugriff unterbunden wird. Die Sicherungsmaßnahmen sind dann unter Umständen zu rigide, weil zum Beispiel bereits nach zwei versehentlichen Fehlversuchen auch dem Zugangsberechtigten kein Zugang mehr gewährt wird. So etwas kann auch bei einem Defekt im Terminal auftreten, der dazu führt, daß die Zugangsberechtigung vom Terminal nicht korrekt erkannt wird.

Aus EP809217 ist eine Vorrichtung zur Sicherung elektronischer Vorrichtungen, insbesondere bei Systemen mit Zugangssicherung (z.B. PIN), bekannt. Dort wird bei Falscheingabe von Identifikationsdaten der Zugriff auf das System sukzessive verzögert. Erreicht wird dies durch einen Falscheingabezähler und eine Verzögerungseinrichtung, sowie einer Kontrolleinrichtung zur Festlegung des Verzögerungsintervails.

Aufgabe der vorliegenden Erfindung ist es, eine technische Lehre zur Sicherung der Freigabe der Funktion einer elektronischen Vorrichtung anzugeben, die einen ausreichenden Schutz gegen Mißbrauch bietet und gleichzeitig verhindert, daß aufgrund von Bedienungsfehlern oder Fehlfunktionen eine Nutzungsberechtigung voreilig versagt wird.

Diese Aufgabe wird mit der Schaltung mit den Merkmalen des Anspruches 1 bzw. mit dem Verfahren mit den Merkmalen des Anspruches 5 gelöst. Ausgestaltungen ergeben sich aus den jeweiligen abhängigen Ansprüchen.

Die erfindungsgemäße Schaltung und das damit zusammenhängende erfindungsgemäße Verfahren erhöhen die Zugriffszeit, d. h. die Zeit zwischen dem Beginn eines Zugriffsversuchs und der Freigabe oder Ausführung einer Funktion der elektronischen Vorrichtung, zum Beispiel eines Chips, bei nicht autorisierten Zugriffen. Dadurch wird eine DP-Analyse (differential power analysis) wirkungsvoll unterbunden, da der zeitliche Aufwand dafür soweit erhöht ist, daß sie praktisch nicht mehr durchführbar ist. Bei bestimmungsgemäßem Gebrauch der für einen autorisierten Zugriff vorgesehenen Mittel werden die Anzahl und die Frequenz der Zugriffe auf die elektronische Vorrichtung nicht eingeschränkt. Gleichzeitig ist das Verfahren bzw. der Einsatz der Schaltung weitgehend tolerant gegenüber Zugriffsversuchen, die aufgrund von versehentlichen Fehlbedienungen oder von Gerätestörungen fehlschlagen.

Die erfindungsgemäße Schaltung umfaßt zwei Komponenten, die durch eine gemeinsame elektrische Größe, z. B. eine Spannung oder eine Ladung gekennzeichnet sind. Bei der einen Komponente kann diese elektrische Größe im Ablauf eines bestimmten Zeitintervalls an einen Referenzwert angeglichen werden, ausgehend von einem von dem Referenzwert verschiedenen Wert, im folgenden als Grundwert bezeichnet. Bei der anderen Komponente kann die elektrische Größe vorzugsweise auf verschiedene Werte eingestellt oder einprogrammiert werden, so daß damit jeweils ein Referenzwert gegeben ist, der verändert werden kann. Es ist eine dritte Komponente vorhanden, die für den Vergleich der Werte der besagten elektrischen Größe der beiden genannten Komponenten vorgesehen ist.

Die Komponenten können z. B. durch zwei Floating-Gate-Zellen oder durch zwei Kondensatoren oder dergleichen gebildet werden, wenn die dritte Komponente ein für den Vergleich von elektrischen Spannungen vorgesehener Komparator ist. In einer bevorzugten Ausführung mit Floating-Gate-Zellen wird die Einsatzspannung als elektrische Größe gewählt. Die Einsatzspannung der ersten Floating-Gate-Zelle wird zeitlich verändert und mittels eines Komparators mit der den Referenzwert bildenden Einsatzspannung der zweiten Floating-Gate-Zelle verglichen. Wenn ein Zugriffsversuch auf die Nutzung der elektronischen Vorrichtung erfolgt, zum Beispiel beim Einführen einer Chipkarte in einen Kartenleser und beim Eingeben einer PIN, wird die erste Floating-Gate-Zelle ausgehend von einem vom dem Referenzwert verschiedenen Wert, dem Grundwert, aufgeladen, bis der Komparator eine Übereinstimmung der Einsatzspannungen der Zellen feststellt.

Nach einem festgestellten unberechtigten Zugriffsversuch wird die oben definierte Zugriffszeit heraufgesetzt, indem der Referenzwert geändert wird oder indem die Geschwindigkeit, mit der die Werte aneinander angeglichen werden, vermindert wird. Mit unberechtigten Zugriffsversuchen verlängert sich somit die abzuwartende Zeit, bis bei einem nachfolgenden Zugriff die Funktion freigegeben wird oder beispielsweise im Fall einer Chipkarte ein Kryptoalgorithmus zur Überprüfung eines Schlüssels abläuft. Das erschwert eine DP-Analyse erheblich, da.sich bereits nach einer geringen Anzahl von nicht autorisierten Zugriffsversuchen die Zeit bis zu einer möglichen Nutzung der Funktion drastisch erhöht hat. Die Zugriffszeit kann nach jedem unberechtigten Zugriffsversuch verlängert werden oder nur, wenn zusätzlich bestimmte vorgegebene Bedingungen erfüllt sind.

Es folgt eine genauere Beschreibung von Ausführungsbeispielen der Erfindung anhand der in den beigefügten drei Figuren dargestellten Programmablaufpläne. Der einfacheren Bezeichnungen halber werden als elektronische Komponenten der Schaltung jeweils zwei Floating-Gate-Zellen und ein Komparator angenommen, der als elektrische Größe in diesem Beispiel die Einsatzspannungen der Zellen miteinander vergleicht.

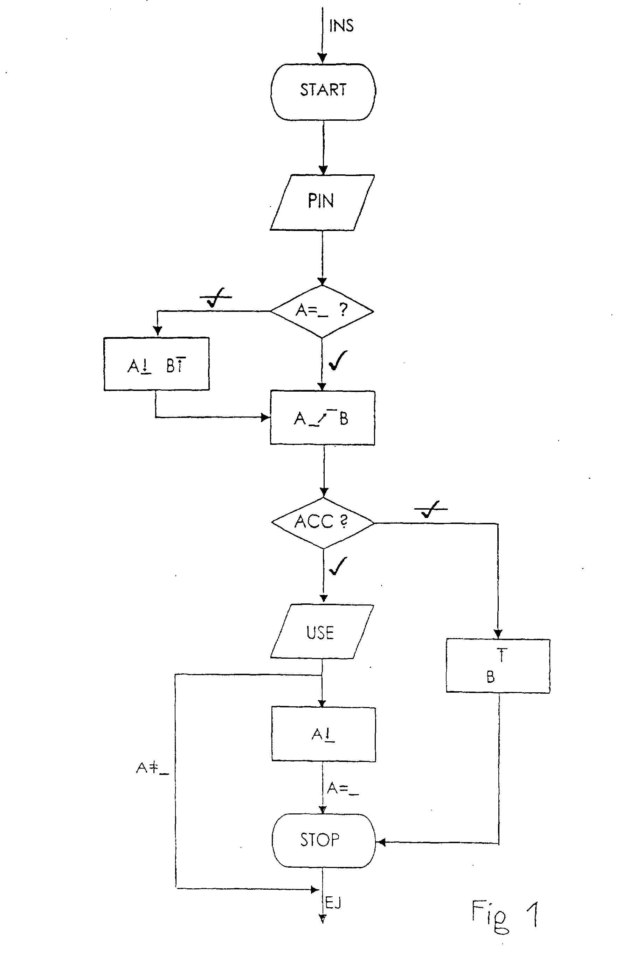

Bei einem Ausführungsbeispiel der Erfindung, bei dem entsprechend dem Programmablaufplan der Figur 1 verfahren wird, ist vor der ersten Feststellung, ob eine Berechtigung zur Nutzung der elektronischen Vorrichtung gegeben ist, also zum Beispiel vor dem ersten Einführen einer Chipkarte in den Chipkartenleser, der Wert der elektrischen Größe der ersten Komponente (eine der Floating-Gate-Zellen, im folgenden als Zelle A bezeichnet) auf einen bestimmten Grundwert (eine bestimmte Einsatzspannung U_{A0}) eingestellt und der Wert der elektrischen Größe der zweiten Komponente (die andere Floating-Gate-Zelle, im folgenden als Zelle B bezeichnet) auf einen davon in einer vorgegebenen Weise verschiedenen Referenzwert (andere Einsatzspannung U_{B0}, vorzugsweise höher als U_{A0}) eingestellt. Damit befinden sich die Komponenten in ihren Grundzuständen. Ein Zugriffsversuch wird im Fall einer Chipkarte typischerweise initialisiert, indem die Karte in einen Kartenleser eingeführt wird (INS→START) und eine PIN oder vergleichbare Daten eingegeben werden. Dann wird zunächst überprüft, ob sich die erste Komponente (Zelle A) im Grundzustand (mit der Einsatzspannung auf dem Grundwert U_{A0}) befindet. Ist das der Fall (A=_ ? 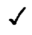 ), wird die Überprüfung der Zugangsberechtigung begonnen, indem zunächst der Wert der elektrischen Größe der ersten Komponente (Einsatzspannung U_{A0} der Zelle A) langsam auf den Referenzwert (Einsatzspannung U_{B0} der Zelle B) gebracht wird (A_↗‾B, indem Zelle A zum Beispiel über eine Folge von kurzen Pulsen oder über eine, im Vergleich zum üblichen Betrieb, verminderte Programmierspannung aufgeladen wird). Eine Freigabe der zu nutzenden Funktionen der elektronischen Vorrichtung im Fall eines autorisierten Zugriffs erfolgt nach Überprüfung der Zugriffsberechtigung (ACC ? 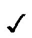 ) erst dann, wenn beide Komponenten denselben Wert der elektrischen Größe (Referenzwert, speziell dieselbe Einsatzspannung) besitzen oder der Betrag der Differenz der Werte unterhalb eines vorgegebenen niedrigen Wertes liegt, was im Beispiel durch den Komparator festgestellt wird.

Nachdem der Nutzer die Funktionen der elektronischen Vorrichtungen genutzt hat (USE), also zum Beispiel am Ende einer ausgeführten Chip(karten)funktion, wird die erste Komponente (Zelle A) wieder in den Grundzustand (Einsatzspannung auf dem Grundwert U_{A0}) versetzt (A↓_). Die Schaltung ist damit für den nächsten Zugriffsversuch, zum Beispiel auf die Funktionen eines Chips, initialisiert (A=_). Die Nutzung wird in regulärer Weise (im Fall der Chipkarte mit dem Auswurf der Karte) beendet (STOP→EJ). Wird die Nutzung vorzeitig unterbrochen, besitzt die erste Komponente (Zelle A) noch einen von dem Grundwert verschiedenen Wert der elektrischen Größe (A≠_, Einsatzspannung von Zelle A verschieden von U_{A0}), wenn der nächste Zugriffsversuch beginnt.

Im ursprünglichen Zustand, zum Beispiel bei Auslieferung eines mit einer erfindungsgemäßen Schaltung gesicherten Chips an den Käufer, sind die Grundzustände der Komponenten so eingestellt, daß beim zeitlichen Verändern des Wertes der ersten Komponente (Aufladen der ersten Zelle A) der Referenzwert (die Einsatzspannung der Zelle B) in kürzester Zeit erreicht wird, so daß die Freigabe der Funktionen der elektronischen Vorrichtung (hier der Chipfunktionen) nicht merklich verzögert wird.

Nach einem unberechtigten Zugriffsversuch (ACC ? nicht 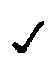 ) wird durch geeignete und an sich bekannte Mittel der elektronischen Schaltung dafür gesorgt, daß ein Angleichen der Werte der Komponenten (Einsatzspannungen der Zellen) länger dauert als zuvor. Das geschieht vorzugsweise auch dann, wenn ein berechtigter Zugriff auf die Nutzung vorzeitig abgebrochen wird. Es kann im Fall einer Ausführung mit Floating-Gate-Zellen und einer niedrigeren Einsatzspannung der Zelle A als Grundwert sowie einer höheren Einsatzspannung der Zelle B als Referenzwert die Einsatzspannung der zweiten Zelle B etwas erhöht werden (B↑‾, zum Beispiel durch einen kurzen Programmierpuls) auf einen neuen, höheren Referenzwert, so daß es länger dauert, bis die erste Zelle A aus dem Grundzustand soweit aufgeladen ist, daß die Einsatzspannungen beider Zellen übereinstimmen. Die Folge ist, daß sich die Zugriffszeit erhöht. Wird zu Beginn des Zugriffsversuches festgestellt, daß die Zelle A nicht im Grundzustand ist (A=_ ? nicht 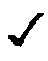 , z. B. Abbruch des letzten Zugriffs), dann wird in diesem Ausführungsbeispiel die Einsatzspannung von Zelle A auf den Grundwert U_{A0} gesetzt (A↓_) und die Einsatzspannung von Zelle B auf einen davon stärker differierenden Wert als neuen Referenzwert geändert (im Beispiel weiter erhöht, B↑‾). Erst dann erfolgt die Angleichung der Einsatzspannungen.

Vorzugsweise werden die Verhältnisse so eingestellt, daß bis zu einer unter Sicherheitsaspekten zugestandenen Anzahl von fehlgeschlagenen Zugriffsversuchen (je nach Anwendung z. B. bis zu einigen hundert) die verlängerte Zugriffszeit den Nutzen der elektronischen Vorrichtung in der praktischen Anwendung, zum Beispiel des Chips, noch nicht merklich einschränkt. Vorzugsweise ist die erfindungsgemäße Schaltung so aufgebaut, daß oberhalb einer vorgegebenen Anzahl unberechtiger Zugriffsversuche die Zeitdauer für das Angleichen der Einsatzspannungen der Zellen sehr stark ansteigt, so daß eine DP-Analyse praktisch nicht mehr durchführbar ist.

Die Schaltung ist vorzugsweise so beschaffen, daß sicherheitshalber auch bei einem abgebrochenen Zugriffsversuch die Zugriffszeit verlängert wird. Das wird durch die Abfrage festgestellt, ob die erste Komponente (Zelle A) im Grundzustand ist (A=_ ?). Wenn der Zugriffsversuch abgebrochen wird, nachdem die Angleichung der Werte der elektrischen Größe der Komponenten (z. B. Einsatzspannungen der Floating-Gate-Zellen) begonnen hat, so daß die erste Komponente (Zelle A) nicht im Grundzustand ist, wird vorzugsweise zu Beginn des nächsten Zugriffsversuches der Wert der ersten Komponente auf den Grundwert (die Einsatzspannung der Zelle A auf U_{A0}) zurückgesetzt und der Referenzwert (die Einsatzspannung der Zelle B) vorsorglich so geändert (im vorstehenden Beispiel erhöht), als wäre bei dem vorherigen Zugriffsversuch festgestellt worden, daß keine Nutzungs- oder Zugangsberechtigung gegeben war. Damit wird sichergestellt, daß sich die erfindungsgemäße Schaltung nur dann in einem Zustand niedrigster Zugriffszeiten befindet, wenn zuvor ausschließlich berechtigte Zugriffe erfolgten und ordnungsgemäß abgeschlossen wurden. Falls der Spannungspegel einer Floating-Gate-Zelle A nicht ausreicht, um festzustellen, ob die Einsatzspannung dieser Zelle nach einem autorisierten und abgeschlossenen Zugriff auf den Grundwert zurückgesetzt wurde, kann für diese Bewertung eine zusätzliche Zelle verwendet werden (zum Beispiel eine digitale Flag-Zelle).

Zur optimalen Anpassung der Abhängigkeit der Zugriffszeit von der Anzahl vorhergehender nicht autorisierter Zugriffsversuche kann die Veränderung des in der einen Komponente gespeicherten Referenzwertes, z. B. die Programmierung der Zelle B, deren Einsatzspannung in erfolglosen oder abgebrochenen Zugriffsversuchen progressiv erhöht wird, abhängig vom jeweiligen Zustand dieser Komponente geregelt werden (zum Beispiel durch dynamische Anpassung der Programmierspannung oder Programmierdauer). Im Fall der Verwendung von Floating-Gate-Zellen kann, anstatt die Einsatzspannung der Zelle B nach jedem fehlgeschlagenen oder abgebrochenen Zugriffsversuch zu ändern, die verlängerte Zugriffszeit dadurch bewirkt werden, daß das Aufladen der Zelle A zum Angleichen der Einsatzspannungen zunehmend verzögert wird, z. B. durch Ändern des Grundwertes der Einsatzspannung der Zelle A oder durch Verlangsamung des Aufladevorganges. Das macht aber im Unterschied zu dem oben beschriebenen bevorzugten Ausführungsbeispiel eine weitere Schaltungskomponente zum Registrieren der nicht ordnungsgemäß beendeten Zugriffsversuche erforderlich.

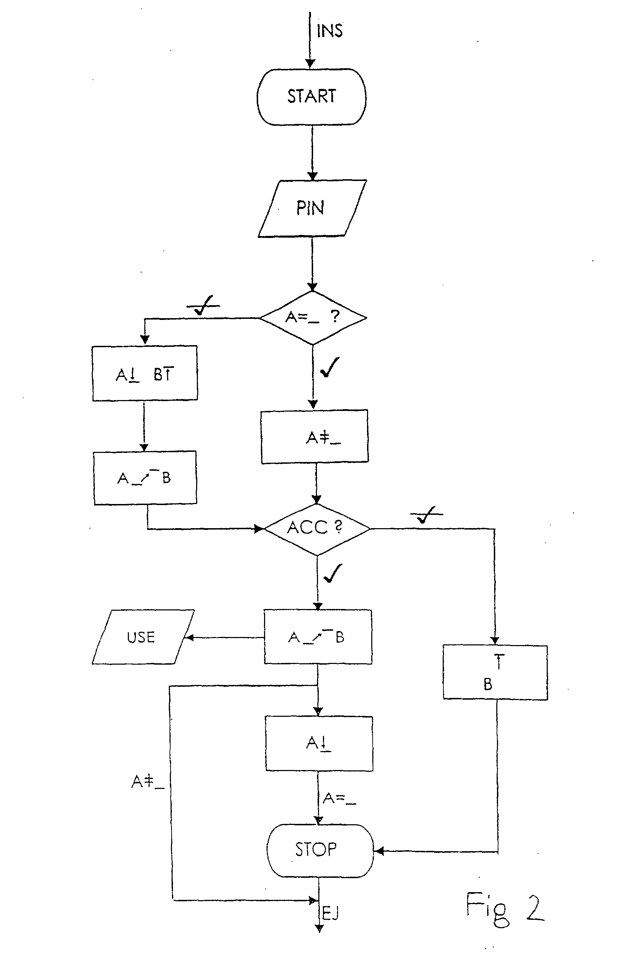

Ein weiteres Ausführungsbeispiel, bei dem entsprechend dem Programmablaufplan der Figur 2 verfahren wird, sieht vor, daß nach der Initialisierung und einer vorzugsweise stattfindenden Abfrage, ob die anzugleichende Komponente (Floating-Gate-Zelle A) sich im Grundzustand befindet, (A=_ ?) zunächst eine Abfrage durchgeführt wird, ob eine Zugangsberechtigung vorliegt (ACC ?). Ist das der Fall (ACC ? 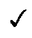 ), erfolgt die Angleichung der Werte (Grundwert bzw. Referenzwert) der elektrischen Größe der Komponenten; beispielsweise wird die Einsatzspannung der Zelle A auf die Einsatzspannung der Zelle B gebracht (A_↗‾B). Während dieses Vorgangs kann bereits die Nutzung der Funktion (USE) der elektronischen Vorrichtung (z. B. der Chipfunktionen der Chipkarte) freigegeben werden, so daß der Anwender nicht den gesamten Angleichungsprozeß abzuwarten braucht. Nur im Fall einer mehrmals veränderten Einstellung der zweiten Komponente (Zelle B) infolge mehrfacher fehlerhafter Zugriffsversuche erhöht sich die Zugriffszeit merklich.

Wird zu Beginn des Zugriffsversuches festgestellt, daß die erste Komponente (Zelle A) nicht im Grundzustand ist (A=_ ? nicht 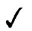 ), dann wird vorzugsweise auch bei diesem Ausführungsbeispiel eine Verzögerung der Zugriffszeit vorgesehen. Dazu wird zunächst die erste Komponente in den Grundzustand gebracht (die Einsatzspannung von Zelle A auf den Grundwert U_{A0} gesetzt) und der Referenzwert geändert (die Einsatzspannung von Zelle B geändert, d. h. in dem Beispiel weiter erhöht, A↓_ B↑‾). Erst nach einer anschließenden Angleichung der Werte der elektrischen Größe der Komponenten (A_↗‾B) erfolgt die Überprüfung der Zugangsberechtigung (ACC ?). Um die Analyse eines Kryptoalgorithmus zu verhindern, wird die Zugriffszeit vorzugsweise in den Fällen erhöht, in denen ein Zugriffsversuch im Anschluß an die Überprüfung der Zugangsberechtigung abgebrochen wird. Das kann auf einfache Weise dadurch geschehen, daß dafür gesorgt wird, daß der Wert der elektrischen Größe der ersten Komponente (Zelle A) im Anschluß an die Überprüfung der Zugangsberechtigung (ACC ?) stets von dem Wert im Grundzustand verschieden ist. Bei einer bereits erfolgten Angleichung der Werte der elektrischen Größe der Komponenten (A_↗‾B) ist das ohnehin der Fall. Liefert die Überprüfung, ob die anzugleichende Komponente (Zelle A) sich im Grundzustand befindet, (A=_ ?) ein positives Ergebnis, kann der Wert der elektrischen Größe der ersten Komponente z. B. auf einen Wert eingestellt werden (A≠_), der von dem Grundzustand verschieden ist, aber eine ausreichende Zeitspanne für die Angleichung an den Wert der elektrischen Größe der zweiten Komponente garantiert (z. B. etwas niedriger oder nur wenig höher ist als der Wert im Grundzustand).

Wird fehlende Zugangsberechtigung festgestellt (ACC ? nicht 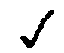 ), wird ebenfalls der Referenzwert geändert (die Einsatzspannung von Zelle B geändert, B↑‾), so daß sich die Zugriffszeit bei nachfolgenden Zugriffsversuchen verlängert. Auch bei diesem Ausführungsbeispiel wird nach einer abgeschlossenen Nutzung (USE) die erste Komponente in den Grundzustand rückgesetzt (die Einsatzspannung der Zelle A auf U_{A0}, A↓_). Nach einem vorzeitigen Abbruch des Zugriffs während des Vorganges der Angleichung befindet sich diese Komponente nicht mehr im Grundzustand (A≠_). Das löst bei einem erneuten Zugriffsversuch die beschriebene Änderung des Zustands der zweiten Komponente (Zelle B, A↓_ B↑‾) aus.

Dieses Ausführungsbeispiel hat den Vorteil, daß die Zugriffszeit nicht durch den Vorgang des Angleichens von Grundwert und Referenzwert der beiden Komponenten verzögert wird, wenn bereits während dieses Vorganges die Nutzung der elektronischen Vorrichtung (Chipfunktion) freigegeben wird. Bei ausschließlich bestimmungsgemäßem Gebrauch der Schaltung tritt folglich eine verlängerte Zugriffszeit erst nach einer Vielzahl von fehlerhaften Zugriffen in Erscheinung.

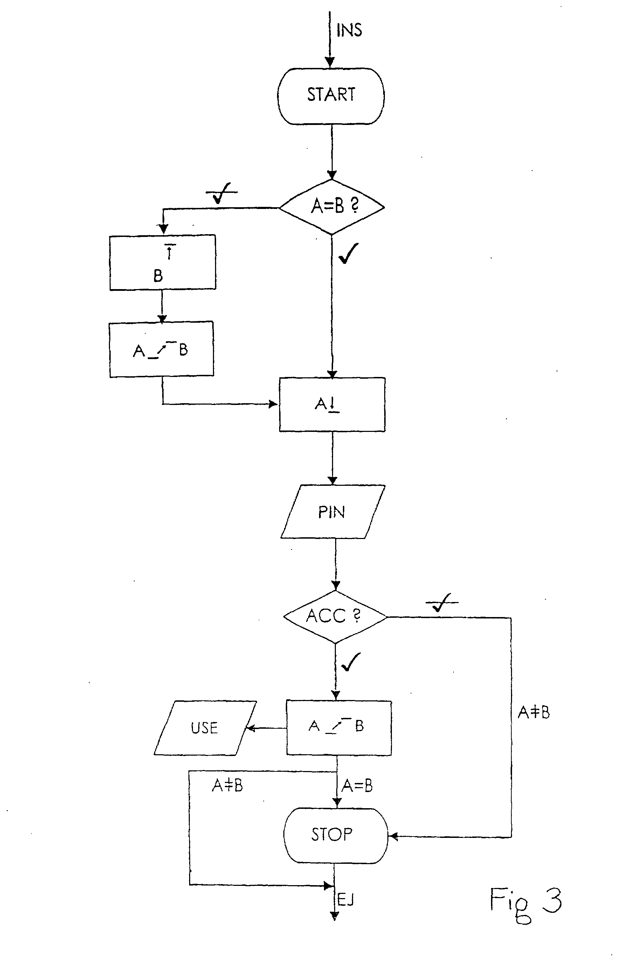

Ein weiteres Ausführungsbeispiel, bei dem entsprechend dem Programmablaufplan der Figur 3 verfahren wird, sieht vor, daß bei ordnungsgemäßer Verwendung der Schaltung zu Beginn die zu vergleichende elektrische Größe bei beiden Komponenten denselben Wert hat (A=B), d. h. im Grundzustand der Komponenten sind bei diesem Ausführungsbeispiel beide Werte gleich dem Referenzwert. Ist das nicht der Fall (A=B ? nicht 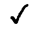 ), wird der Wert der zweiten Komponente (Referenzwert) so verändert, daß das Erreichen des Referenzwertes ausgehend vom Grundwert der ersten Komponente ein längeres Zeitintervall in Anspruch nimmt als zuvor (B↑‾) und anschließend mit einer Angleichung der Werte der elektrischen Größe der Komponenten (A_↗‾B) eine Zeitverzögerung bewirkt. Dann wird jeweils bei der ersten Komponente der Grundwert eingestellt (A↓_). Gegebenenfalls werden im Anschluß an diese erste Abfrage noch Daten (PIN oder dergleichen) eingegeben, die für die Überprüfung der Zugangsberechtigung erforderlich sind. Das kann aber auch wie in den zuvor beschriebenen Ausführungsbeispielen zu Beginn (z. B. sofort nach dem Einführen einer Chipkarte INS→START) erf olgen .

Vor oder nach der Überprüfung der Zugangsberechtigung (ACC ?) werden die Werte der elektrischen Größe aneinander angeglichen, indem der Grundwert während eines bestimmten Zeitintervalles geändert und nach und nach an den Referenzwert angeglichen wird (A_↗‾B). Während dieser Vorgang abläuft, kann bereits die Nutzung freigegeben werden (USE), falls die Zugangsberechtigung bereits festgestellt worden ist. Nach einem erfolgten Angleichen der Werte (A=B, gegebenenfalls innerhalb unvermeidlicher Toleranzen), befinden sich beide Komponenten in dem für dieses Ausführungsbeispiel charakteristischen Grundzustand, der einen erneuten Zugriff ohne Verlängerung der Zugriffszeit ermöglicht. Falls der Zugriff verweigert wird (ACC ? nicht 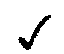 ) oder falls der Zugriff vorzeitig abgebrochen wird (keine vollständige Angleichung), sind die Werte der elektischen Größe bei beiden Komponenten voneinander verschieden (A≠B), so daß zu Beginn des nächsten Zugriffsversuches automatisch eine Änderung des Wertes (Referenzwert) der zweiten Komponente (B↑‾) und durch den beschriebenen Vorgang des Angleichens (A_↗‾B) eine Zeitverzögerung herbeigeführt wird.

Um in den Ausführungsbeispielen mit Floating-Gate-Zellen mit unterschiedlichen Grundzuständen (Grundwert ungleich Referenzwert) eine Manipulation mittels UV-Bestrahlung ausschließen zu können, kann zusätzlich zu der Zelle B, deren Einsatzspannung nach erfolglosen Zugriffsversuchen sukzessive erhöht wird, eine weitere Zelle C in der Schaltung vorhanden sein, die jeweils in den entgegengesetzten Zustand zu der Zelle B gebracht wird. Bei einigen Ausführungsformen kann das erfolgen, indem die weitere Zelle C mit Pulsen gleicher Höhe und Zeitdauer wie die Zelle B, aber entgegengesetzter Polarität beaufschlagt wird. Die beiden Zellen B und C werden vorzugsweise benachbart zueinander angeordnet und vor dem ersten Gebrauch der Schaltung mit einer Differenz ihrer Einsatzspannungen versehen. Zeigen die beiden Zellen später in irgendeinem Betriebszustand dieselbe Einsatzspannung, kann das als Indiz dafür angesehen werden, daß versucht wurde, die Schaltung mit UV-Bestrahlung zu manipulieren. Es können dann geeignete Gegenmaßnahmen ergriffen werden.

Durch eine geeignete Ausgestaltung der Source-/Drain-Anschlüsse der Zelle B, deren Einsatzspannung nach erfolglosen Zugriffsversuchen sukzessive geändert wird, kann verhindert werden, daß diese Einsatzspannung elektrisch zurück auf ihren Ausgangswert gebracht wird. Eine Angleichung der Einsatzspannungen auf elektronischem Weg und damit eine Umgehung der Sicherungsfunktion der Schaltung kann damit ausgeschlossen werden.

Die Zugangsberechtigung kann je nach vorliegenden Sicherheitserfordernissen bereits während des Vorgangs des Angleichens der Werte der Komponenten (Aufladen der einen Zelle) oder erst nach vollständig erfolgter Angleichung (der Einsatzspannungen) überprüft werden. Ergibt die Abfrage (ACC ?) der Zugangsberechtigung, daß die Berechtigung zur Nutzung der elektronischen Vorrichtung gegeben ist, wird diese Nutzung freigegeben und der Zugriff kann erfolgen. Nach ordnungsgemäßem Abschluß des Zugriffs veranlaßt die Schaltung einen Reset, mit dem zumindest die Komponente der Schaltung, deren Wert in dem Vorgang des Angleichens verändert wird, (Zelle A) in den vorgegebenen Grundzustand zurückgesetzt wird. Ergibt die Abfrage der Zugangsberechtigung hingegen, daß kein autorisierter Zugriffsversuch vorliegt, sei es, daß die Berechtigung fehlt, sei es, daß ein Defekt in der die Berechtigung überprüfenden elektronischen Vorrichtung (Terminal) vorliegt, erfolgt eine Änderung der Zugriffszeit, indem die Differenz zwischen dem Grundwert der ersten Komponente und dem Referenzwert der zweiten Komponente (zum Beispiel die Differenz der Beträge der Einsatzspannungen der Zellen) vergrößert wird. Bei einem erneuten Zugriffsversuch wird mit dem Angleichen dieser jetzt auf eine größere Differenz gebrachten Werte die Zugriffszeit festgelegt. Je nachdem, ob die Abfrage gegebene oder fehlende Berechtigung ergibt, wird der Zugriff auf die Nutzung der elektronischen Vorrichtung freigegeben oder erneut eine Änderung der Zugriffszeit veranlaßt.

Es ist bei der erfindungsgemäßen Schaltung nur erforderlich, daß die erste Komponente nach jedem ordnungsgemäß abgeschlossenen Zugriff in den Grundzustand rückversetzt wird. Das hat allerdings zur Konsequenz, daß während der gesamten Gebrauchsdauer der Schaltung (z. B. Lebensdauer der Chipkarte) jeder nicht bestimmungsgemäß ausgeführte Zugriff eine Verlängerung der Zugriffszeit bewirkt, so daß die Verwendung der Schaltung unter Umständen nach einiger Zeit stark beeinträchtigt wird. Bei geringeren Sicherheitsanforderungen kann deshalb vorgesehen werden, daß bei dem ordnungsgemäßen Abschluß (STOP) jedes berechtigten Zugriffs beide Komponenten (sowohl Zelle A als auch Zelle B) in ihre jeweiligen Grundzustände zurückgesetzt worden sind. Alternativ kann vorgesehen sein, daß ein derartiger vollständiger Reset nur auf ausdrücklichen Befehl (entsprechende Eingabe von Daten) des Nutzers während eines berechtigten Zugriffs durchgeführt wird. Der Anwender oder Nutzer der Schaltung könnte in diesem Fall die Zugriffszeit nach einer Anzahl von fehlerhaft ausgeführten Zugriffen auf einen niedrigen Ausgangswert zurücksetzen.

Aufgrund der kurzen Zugriffszeiten, die sich bei Zugriffsversuchen durch Berechtigte allenfalls unwesentlich erhöhen, eignet sich dieses Verfahren für alle Anwendungen, auch für kontaktlos eingesetzte Chips oder Chipkarten. Da die Anzahl der Zugriffsversuche in einem bestimmten Zeitraum bei bestimmungsgemäßer Verwendung nicht beschränkt wird, eignet sich das Verfahren für alle Anwendungen mit hoher Zugriffsfrequenz. Selbst bei einer Störung eines Terminals und den daraus resultierenden zurückgewiesenen Zugriffsversuchen bleibt die Funktionsfähigkeit eines Chips oder einer anderen abgesicherten elektronischen Vorrichtung grundsätzlich erhalten. Das ist ein Vorteil gegenüber einer herkömmlichen Sperrung eines Chips durch einen Fehlversuchszähler.

## Patentansprüche

1. Elektronische Schaltung zur Sicherung elektronischer Vorrichtungen,
- bei der eine erste und eine zweite Komponente vorhanden sind, die jeweils eine gleichartige elektrische Größe aufweisen,
- bei der eine dritte Komponente vorhanden ist, die dafür vorgesehen ist, Werte der elektrischen Größe der ersten Komponente und der zweiten Komponente miteinander zu vergleichen,
- bei der erste Mittel vorhanden sind, mit denen die Werte der elektrischen Größe der ersten Komponente und der zweiten Komponente eingestellt werden,
- bei der zweite Mittel vorhanden sind, mit denen der Wert der elektrischen Größe der ersten Komponente ausgehend von einem Grundwert in einer eine bestimmte Zeit beanspruchenden Weise an den Wert der elektrischen Größe der zweiten Komponente angeglichen wird,
- bei der dritte Mittel vorhanden sind, mit denen überprüft wird, ob eine berechtigte Nutzung der elektronischen Vorrichtung bestimmungsgemäß eingeleitet, ausgeführt und beendet wird, und mit denen im Fall unberechtigter oder nicht bestimmungsgemäßer Nutzung eine Änderung des Wertes der elektrischen Größe der zweiten Komponente oder eine Änderung der zweiten Mittel derart herbeigeführt wird, daß die Zeit, die zum Angleichen des Wertes der elektrischen Größe der ersten Komponente an den Wert der elektrischen Größe der zweiten Komponente durch die zweiten Mittel erforderlich ist, verlängert ist.

2. Schaltung nach Anspruch 1,
bei der mit den dritten Mitteln überprüft wird, ob der Wert der elektrischen Größe der ersten Komponente gleich einem Wert ist, den die elektrische Größe der ersten Komponente im Anschluß an eine bestimmungsgemäß beendete Nutzung der elektronischen Vorrichtung besitzt.

3. Schaltung nach Anspruch 1 oder 2,
bei der die erste Komponente und die zweite Komponente eine erste Floating-Gate-Zelle und eine zweite Floating-Gate-Zelle sind.

4. Schaltung nach Anspruch 3,
bei der die elektrische Größe der Komponenten eine Einsatzspannung ist und
bei der im Fall unberechtigter oder nicht bestimmungsgemäßer Nutzung der Wert der Einsatzspannung der zweiten Floating-Gate-Zelle geändert wird.

5. Verfahren zur Sicherung elektronischer Vorrichtungen, bei dem unter Einsatz einer elektronischen Schaltung mit einer ersten und einer zweiten Komponente, die eine gleichartige elektrische Größe aufweisen, und mit Mitteln, die eine Einstellung der Werte der elektrischen Größe bei beiden Komponenten erlauben, bewirkt wird,
- daß eine Nutzung der elektronischen Vorrichtung mindestens so lange dauert, wie erforderlich ist, um einen vorgegebenen Grundwert der elektrischen Größe der ersten Komponente mittels eines eine bestimmte Zeit beanspruchenden elektronischen Vorganges an einen jeweiligen, als Referenzwert fungierenden Wert der elektrischen Größe der zweiten Komponente anzugleichen, und
- daß infolge eines unberechtigten Zugriffs auf die Nutzung oder einer nicht bestimmungsgemäß durchgeführten Nutzung die von dem elektronischen Vorgang beanspruchte Zeit durch Verändern des Referenzwertes oder durch Verändern der Geschwindigkeit des Angleichens verlängert wird.

6. Verfahren nach Anspruch 5,
bei dem zwei Floating-Gate-Zellen mit einstellbaren Einsatzspannungen als Komponenten der Schaltung verwendet werden und der elektronische Vorgang ein zeitlich verzögertes Aufladen einer der Zellen ist.

7. Verfahren nach Anspruch 5 oder 6, bei dem
in einem ersten Schritt überprüft wird (A=_ ?), ob der Wert der elektrischen Größe der ersten Komponente einem vorgegebenen Grundwert entspricht,
in einem zweiten Schritt im Fall eines positiven Ergebnisses dieser Überprüfung zu dem nachfolgenden dritten Schritt gegangen wird und im Fall eines negativen Ergebnisses der Wert der elektrischen Größe der ersten Komponente auf den Grundwert gesetzt wird und der Wert der elektrischen Größe der zweiten Komponente auf einen neuen Referenzwert gesetzt wird (A↓_ B↑‾), so daß die von dem elektronischen Vorgang beanspruchte Zeit verlängert ist,
in einem dritten Schritt der elektronische Vorgang ausgeführt wird (A_↗‾B), bis die Werte der elektrischen Größe der beiden Komponenten übereinstimmen,
in einem vierten Schritt überprüft wird (ACC ?), ob eine Berechtigung zur Nutzung der elektronischen Vorrichtung vorhanden ist,
in einem fünften Schritt im Fall eines positiven Ergebnisses dieser Überprüfung die Nutzung (USE) der elektronischen Vorrichtung ermöglicht wird und im Fall eines negativen Ergebnisses der Wert der elektrischen Größe der zweiten Komponente auf einen neuen Referenzwert gesetzt wird (B↑‾), so daß die von dem elektronischen Vorgang beanspruchte Zeit verlängert ist, und
in einem sechsten Schritt der Wert der elektrischen Größe der ersten Komponente auf den Grundwert gesetzt wird (A↓_).

8. Verfahren nach Anspruch 5 oder 6, bei dem
in einem ersten Schritt überprüft wird (A=_ ?), ob der Wert der elektrischen Größe der ersten Komponente einem vorgegebenen Grundwert entspricht,
in einem zweiten Schritt im Fall eines positiven Ergebnisses dieser Überprüfung zu dem nachfolgenden dritten Schritt gegangen wird und im Fall eines negativen Ergebnisses der Wert der elektrischen Größe der ersten Komponente auf den Grundwert gesetzt wird und der Wert der elektrischen Größe der zweiten Komponente auf einen neuen Referenzwert gesetzt wird (A↓_ B↑‾), so daß die von dem elektronischen Vorgang beanspruchte Zeit verlängert ist, und der elektronische Vorgang ausgeführt wird (A_↗‾B), bis die Werte der elektrischen Größe der beiden Komponenten übereinstimmen,
in einem dritten Schritt überprüft wird (ACC ?), ob eine Berechtigung zur Nutzung der elektronischen Vorrichtung vorhanden ist,
in einem vierten Schritt im Fall eines positiven Ergebnisses dieser Überprüfung der elektronische Vorgang ausgeführt wird (A_↗‾B), bis die Werte der elektrischen Größe der beiden Komponenten übereinstimmen, sowie die Nutzung (USE) der elektronischen Vorrichtung ermöglicht wird und im Fall eines negativen Ergebnisses der Wert der elektrischen Größe der zweiten Komponente auf einen neuen Referenzwert gesetzt wird (B↑‾), so daß die von dem elektronischen Vorgang beanspruchte Zeit verlängert ist, und
in einem fünften Schritt der Wert der elektrischen Größe der ersten Komponente auf den Grundwert gesetzt wird (A↓_).

9. Verfahren nach Anspruch 5 oder 6, bei dem
in einem ersten Schritt überprüft wird (A=B ?), ob der Wert der elektrischen Größe der ersten Komponente gleich dem Wert der elektrischen Größe der zweiten Komponente ist,
in einem zweiten Schritt im Fall eines positiven Ergebnisses dieser Überprüfung zu dem nachfolgenden dritten Schritt gegangen wird und im Fall eines negativen Ergebnisses der Wert der elektrischen Größe der zweiten Komponente auf einen neuen Referenzwert gesetzt wird (B↑‾), so daß die von dem elektronischen Vorgang beanspruchte Zeit verlängert ist,
in einem dritten Schritt der Wert der elektrischen Größe der ersten Komponente auf einen vorgegebenen Grundwert, der von dem Referenzwert verschieden ist, gesetzt wird (A↓_),
in einem vierten Schritt der elektronische Vorgang ausgeführt wird (A_↗‾B), bis die Werte der elektrischen Größe der beiden Komponenten übereinstimmen,
in einem fünften Schritt überprüft wird (ACC ?), ob eine Berechtigung zur Nutzung der elektronischen Vorrichtung vorhanden ist, und
in einem sechsten Schritt im Fall eines positiven Ergebnisses dieser Überprüfung die Nutzung (USE) der elektronischen Vorrichtung ermöglicht wird und im Fall eines negativen Ergebnisses der Wert der elektrischen Größe der zweiten Komponente auf einen neuen Referenzwert gesetzt wird (B↑‾), so daß die von dem elektronischen Vorgang beanspruchte Zeit verlängert ist.

10. Verfahren nach Anspruch 5 oder 6, bei dem
in einem ersten Schritt überprüft wird (A=B ?), ob der Wert der elektrischen Größe der ersten Komponente gleich dem Wert der elektrischen Größe der zweiten Komponente ist,
in einem zweiten Schritt im Fall eines positiven Ergebnisses dieser Überprüfung zu dem nachfolgenden dritten Schritt gegangen wird und im Fall eines negativen Ergebnisses der Wert der elektrischen Größe der zweiten Komponente auf einen neuen Referenzwert gesetzt wird (B↑‾), so daß die von dem elektronischen Vorgang beanspruchte Zeit verlängert ist, und der elektronische Vorgang ausgeführt wird (A_↗‾B), bis die Werte der elektrischen Größe der beiden Komponenten übereinstimmen, in einem dritten Schritt der Wert der elektrischen Größe der ersten Komponente auf einen vorgegebenen Grundwert, der von dem Referenzwert verschieden ist, gesetzt wird (A↓_),
in einem vierten Schritt überprüft wird (ACC ?), ob eine Berechtigung zur Nutzung der elektronischen Vorrichtung vorhanden ist,
in einem fünften Schritt im Fall eines positiven Ergebnisses dieser Überprüfung der elektronische Vorgang ausgeführt wird (A_↗‾B), bis die Werte der elektrischen Größe der beiden Komponenten übereinstimmen, sowie die Nutzung (USE) der elektronischen Vorrichtung ermöglicht wird und im Fall eines negativen Ergebnisses ein Abbruch erfolgt (STOP).

## Claims

1. Electronic circuit for protecting electronic devices,
- in which there are first and second components which each have the same electrical variable,
- in which there is a third component which is provided for comparing values of the electrical variable of the first component and of the second component with one another,
- in which there are first means with which the values of the electrical variable of the first component and of the second component are set,
- in which there are second means with which the value of the electrical variable of the first component is approximated to the value of the electrical variable of the second component on the basis of a basic value in a way which takes a specific time,
- in which there are third means with which it is checked whether an authorized use of the electronic device is initiated, executed and terminated in accordance with the regulations and with which, in the case of an unauthorized use, or use which is not in accordance with the regulations, a change in the value of the electrical variable of the second component or a change in the second means is brought about in such a way that the time which is necessary to approximate the value of the electrical variable of the first component to the value of the electrical variable of the second component by the second means is prolonged.

2. Circuit according to Claim 1, in which with the third means it is checked whether the value of the electrical variable of the first component is equal to a value which the electrical variable of the first component has after a use of the electronic device which is terminated in accordance with the regulations.

3. Circuit according to Claim 1 or 2, in which the first component and the second component are a first floating gate cell and a second floating gate cell.

4. Circuit according to Claim 3, in which the electrical variable of the components is a turn-on. voltage, and
in which, in the case of an unauthorized use, or use which is not in accordance with the regulations, the value of the turn-on voltage of the second floating gate cell is changed.

5. Method for protecting electronic devices in which, while using an electronic circuit with first and second components which have the same electrical variable, and with means which permit the values of the electrical variable to be set in both components, it is ensured
- that a use of the electronic device lasts at least as long as is necessary to approximate a predefined basic value of the electrical variable of the first component to a respective value of the electrical variable of the second component which functions as a reference value, by means of an electronic process which takes a specific time, and
- that, as a result of an unauthorized access to the use, or as a result of a use which is not carried out in accordance with the regulations, the time taken by the electronic process is prolonged by changing the reference value or by changing the speed of the approximation.

6. Method according to Claim 5, in which two floating gate cells with adjustable turn-on voltages are used as components of the circuit, and the electronic process is delayed charging of one of the cells.

7. Method according to Claim 5 or 6, in which, in a first step it is checked (A=_ ?) whether the value of the electrical variable of the first component corresponds to a predefined basic value,
in a second step, in the case of a positive result of this check, the system proceeds to the following third step and, in the case of a negative result, the value of the electrical variable of the first component is set to the basic value, and the value of the electrical variable of the second component is set to a new reference value (A↓_ B↑‾), so that the time taken by the electronic process is prolonged,
in a third step the electronic process is executed (A_↗‾B) until the values of the electrical variable of the two components correspond,
in a fourth step it is checked (ACC ?) whether there is an authorization to use the electronic device,
in a fifth step, in the case of a positive result of this check, the use (USE) of the electronic device is made possible, and, in the case of a negative result, the value of the electrical variable of the second component is set (B↑‾) to a new reference value, so that the time taken by the electronic process is prolonged, and
in a sixth step the value of the electrical variable of the first component is set (A↓_) to the basic value.

8. Method according to Claim 5 or 6, in which, in a first step, it is checked (A=_ ?) whether the value of the electrical variable of the first component corresponds to a predefined basic value,
in a second step, in the case of a positive result of this check, the system proceeds to the following third step, and, in the case of a negative result, the value of the electrical variable of the first component is set to the basic value, and the value of the electrical variable of the second component is set to a new reference value, (A↓_ B↑‾) so that the time taken by the electronic process is prolonged, and the electronic process is executed (A_↗‾B) until the values of the electrical variable of the two components correspond,
in a third step it is checked (ACC ?) whether there is an authorization to use the electronic device,
in a fourth step, in the case of a positive result of this check, the electronic process is executed (A_↗‾B) until the values of the electrical variable of the two components correspond, and the use (USE) of the electronic device is made possible and, in the case of a negative result, the value of the electrical variable of the second component is set (B↑‾) to a new reference value,
so that the time taken by the electronic process is prolonged, and
in a fifth step the value of the electrical variable of the first component is set (A↓_) to the basic value.

9. Method according to Claim 5 or 6, in which, in a first step, it is checked (A=B ?) whether the value of the electrical variable of the first component is equal to the value of the electrical variable of the second component,
in a second step, in the case of a positive result of this check, the system proceeds to the following third step, and, in the case of a negative result, the value of the electrical variable of the second component is set (B↑‾) to a new reference value, so that the time taken by the electronic process is prolonged,
in a third step the value of the electrical variable of the first component is set (A↓_) to a predefined basic value which is different from the reference value,
in a fourth step the electronic process is executed (A_↗‾B) until the values of the electrical variable of the two components correspond,
in a fifth step it is checked (ACC ?) whether there is an authorization to use the electronic device, and
in a sixth step, in the case of a positive result of this check, the use (USE) of the electronic device is made possible and, in the case of a negative result, the value of the electrical variable of the second component is set (B↑‾) to a new reference value, so that the time taken by the electronic process is prolonged.

10. Method according to Claim 5 or 6, in which, in a first step it is checked (A=B ?) whether the value of the electrical variable of the first component is equal to the value of the electrical variable of the second component,
in a second step, in the case of a positive result of this check, the system proceeds to the following third step, and, in the case of a negative result, the value of the electrical variable of the second component is set (B↑‾) to a new reference value, so that the time taken by the electronic process is prolonged, and the electronic process is executed (A_↗‾B) until the values of the electrical variable of the two components correspond,
in a third step the value of the electrical variable of the first component is set (A↓_) to a predefined basic value which is different from the reference value,
in a fourth step it is checked (ACC ?) whether there is an authorization to use the electronic device,
in a fifth step, in the case of a positive result of this check, the electronic process is executed (A_↗‾B) until the values of the electrical variable of the two components correspond, and the use (USE) of the electronic device is made possible, and, in the case of a negative result, an abort takes place (STOP).

## Revendications

1. Circuit électronique de sécurisation de dispositifs électroniques,
- dans lequel il est prévu un premier et un deuxième composant qui ont, respectivement, une grandeur électrique de même type,
- dans lequel il est prévu un troisième composant qui est destiné à comparer entre elles les valeurs de la valeur électrique du premier composant et du deuxième composant,
- dans lequel il est prévu des premiers moyens par lesquels les valeurs de la grandeur électrique du premier composant et du deuxième composant sont réglées,
- dans lequel il est prévu des deuxièmes moyens par lesquels la valeur de la grandeur électrique du premier composant est rendue égale à partir d'une valeur de base d'une façon nécessitant un certain temps à la valeur de la grandeur électrique du deuxième composant,
- dans lequel il est prévu des troisièmes moyens par lesquels il est contrôlé si une utilisation autorisée du dispositif électronique a été commencée, réalisée et terminée suivant les prescriptions et par lesquels, dans le cas d'une utilisation qui n'est pas autorisée ou qui n'est pas conforme aux prescriptions, il est provoqué une modification de la valeur de la grandeur électrique du deuxième composant ou une modification des deuxièmes moyens, de façon à ce que le temps qui est nécessaire pour rendre la valeur de la grandeur électrique du premier composant égale à la valeur de la grandeur électrique du deuxième composant par les deuxièmes moyens soit augmenté.

2. Circuit suivant la revendication 1,
dans lequel il est contrôlé par les troisièmes moyens si la valeur de la grandeur électrique du premier composant est égale à une valeur que possède la grandeur électrique du premier composant à la suite d'une utilisation terminée conformément aux prescriptions du dispositif électronique.

3. Circuit suivant la revendication 1 ou 2,
dans lequel le premier composant et le deuxième composant sont une première cellule de grille flottante et une deuxième cellule de grille flottante.

4. Circuit suivant la revendication 3,
dans lequel la grandeur électrique des composants est un tension de coupure et
dans lequel, dans le cas d'une utilisation qui n'est pas autorisée ou qui n'est pas conforme aux prescriptions, la valeur de la tension de coupure de la deuxième cellule de grille flottante est modifiée.

5. Procédé de sécurisation de dispositifs électroniques, dans lequel on fait en sorte, en utilisant un circuit électronique ayant un premier et deuxième composant qui ont une grandeur électrique de même type et par des moyens qui permettent un réglage des valeurs de la grandeur électrique dans les deux composants,
- qu'une utilisation du dispositif électronique dure au moins aussi longtemps qu'il est nécessaire pour rendre une valeur de base donnée à l'avance de la grandeur électrique du premier composant, au moyen d'une opération électronique nécessitant un certain temps, égale à une valeur respective servant de valeur de référence de la grandeur électrique du deuxième composant et
- que, en raison d'un accès à l'utilisation qui n'est pas autorisé ou d'une utilisation effectuée d'une manière qui n'est pas conforme aux prescriptions, le temps nécessaire pour l'opération électronique est augmenté par modification de la valeur de référence ou par modification de la vitesse de l'égalisation.

6. Procédé suivant la revendication 5,
dans lequel on utilise deux cellules à grille flottante à tension de coupure réglable comme composants du circuit et l'opération électronique est une charge retardée dans le temps de l'une des cellules.

7. Procédé suivant la revendication 5 ou 6, dans lequel
on contrôle dans un premier stade (A=_ ?) si la valeur de la grandeur électrique du premier composant correspond à une valeur de base donnée à l'avance,
on procède dans un deuxième stade, dans le cas où le résultat de ce contrôle est positif, au troisième stade suivant et dans le cas où le résultat est négatif, on met la valeur de la grandeur électrique du premier composant à la valeur de base et on met la valeur de la grandeur électrique du deuxième composant à une nouvelle valeur de référence (A↓_B↑‾), de sorte que le temps nécessaire pour l'opération électronique est augmenté,
dans un troisième stade on effectue l'opération électronique (A_ ‾B) jusqu'à ce que les valeurs de la grandeur électrique des deux composants coïncident,
dans un quatrième stade on contrôle (ACC ?) s'il y a une autorisation d'utiliser le dispositif électronique,
dans un cinquième stade, dans le cas où le résultat de ce contrôle est positif, on rend possible l'utilisation (USE) du circuit électronique et dans le cas où le résultat de ce contrôle est négatif, on met la valeur de la grandeur électrique du deuxième composant à une nouvelle valeur de référence (B ‾), de sorte que le temps nécessaire à l'opération électronique est augmenté et
dans un sixième stade, on met la valeur de la grandeur électrique du premier composant à la valeur de base (A _).

8. Procédé suivant la revendication 5 ou 6, dans lequel
dans un premier stade on contrôle (A=_ ?) si la valeur de la grandeur électrique du premier composant correspond à une valeur de base donnée à l'avance,
dans un deuxième stade, dans le cas où le résultat de ce contrôle est positif, on procède au troisième stade suivant et dans le cas où le résultat de ce contrôle est négatif, on met la valeur de la grandeur électrique du premier composant à la valeur de base et on met la valeur de la grandeur électrique du deuxième composant à une nouvelle valeur de référence (A↓_B↑‾), de sorte que le temps nécessaire à l'opération électronique est augmenté et on effectue l'opération électronique (A_ ‾B) jusqu'à ce que les valeurs de la grandeur électrique des deux composants coïncident,
dans un troisième stade on contrôle (ACC ?) s'il y a une autorisation d'utiliser le dispositif électronique,
dans un quatrième stade, dans le cas où le résultat de ce contrôle est positif, on effectue l'opération électronique (A_ ‾B) jusqu'à ce que les valeurs de la grandeur électrique des deux composants coïncident et on rend possible l'utilisation (USE) du dispositif électronique et dans le cas où le résultat de ce contrôle est négatif, on met la valeur de la grandeur électrique du deuxième composant à une nouvelle valeur de référence (B ‾), de sorte que le temps nécessaire à l'opération électronique est augmenté et
dans un cinquième stade, on met la valeur de la grandeur électrique du premier composant à la valeur de base (A _).

9. Procédé suivant la revendication 5 ou 6, dans lequel
dans un premier stade on contrôle (A=B ?) si la valeur de la grandeur électrique du premier composant est égale à la valeur de la grandeur électrique du deuxième composant,
dans un deuxième stade, dans le cas où le résultat de ce contrôle est positif, on procède au troisième stade suivant et dans le cas où le résultat de ce contrôle est négatif, on met la valeur de la grandeur électrique du deuxième composant à une nouvelle valeur de référence (B ‾), de sorte que le temps nécessaire à l'opération électronique est augmenté,
dans un troisième stade on met la valeur de la grandeur électrique du premier composant à une valeur de base donnée à l'avance qui est différente de la valeur de référence (A _),
dans un quatrième stade on effectue l'opération électronique (A_ ‾B) jusqu'à ce que les valeurs de la grandeur électrique de deux composants coïncident,
dans un cinquième stade, on contrôle (ACC ?) s'il y a une autorisation d'utiliser le dispositif électronique et
dans un sixième stade, dans le cas où le résultat de ce contrôle est positif, on rend possible l'utilisation (USE) du dispositif électronique et dans le cas où le résultat de ce contrôle est négatif, on met la valeur de la grandeur électrique du deuxième composant à une nouvelle valeur de référence (B ‾), de sorte que la durée nécessaire à l'opération électronique est augmentée.

10. Procédé suivant la revendication 5 ou 6, dans lequel
dans un premier stade on contrôle (A=B ?) si la valeur de la grandeur électrique du premier composant est égale à la valeur de la grandeur électrique du deuxième composant,
dans un deuxième stade, dans le cas où le résultat de ce contrôle est positif, on procède au troisième stade suivant et dans le cas où le résultat de ce contrôle est négatif, on met la valeur de la grandeur électrique du deuxième composant à une nouvelle valeur de référence (B ‾), de sorte que le temps nécessaire à l'opération électronique est augmenté et on effectue l'opération électronique (A_ ‾B) jusqu'à ce que les valeurs de la grandeur électrique des deux composants coïncident,
dans un troisième stade on met la valeur de la grandeur électrique du premier composant à une valeur de base donnée à l'avance qui est différente de la valeur de référence (A -),
dans un quatrième stade on contrôle (ACC ?) s'il y a une autorisation d'utiliser le dispositif électronique,
dans un cinquième stade, dans le cas où le résultat de ce contrôle est positif, on effectue l'opération électronique (A_ ‾B) jusqu'à ce que les valeurs de la grandeur électrique des deux composants coïncident et on rend possible l'utilisation (USE) du dispositif électronique et, dans le cas où le résultat de ce contrôle est négatif, on effectue une interruption (STOP).
